# EUROPEAN PATENT SPECIFICATION

(11) **EP 1 832 140 B1**
(45) Date of publication and mention of the grant of the patent: **11.03.2020**
(21) Application number: 05819826.8
(22) Date of filing: 29.12.2005
(51) Int. Cl.: H04M 15/00, H04W 4/24, H04W 8/20, H04W 8/18, H04W 76/10

(54) **A METHOD, A SERVER, A SYSTEM AND A COMPUTER PROGRAM PRODUCT IN A CELLULAR TELECOMMUNICATIONS NETWORK ADAPTED FOR ALTERNATIVE ROUTING**
VERFAHREN, SERVER, SYSTEM UND COMPUTERPROGRAMMPRODUKT IN EINEM FÜR ALTERNATIVES ROUTING AUSGELEGTEN ZELLULAREN TELEKOMMUNIKATIONSNETZ
PROCÉDÉ, SERVEUR, SYSTÈME ET PRODUIT-PROGRAMME INFORMATIQUE DANS UN RÉSEAU DE TÉLÉCOMMUNICATIONS ADAPTÉS POUR UN ROUTAGE ALTERNATIF

(30) Priority: 30.12.2004 SE 0403203; 30.12.2004 US 640062 P
(43) Date of publication of application: 12.09.2007
(73) Proprietor: Mitel Communications AB, 120 08 Stockholm (SE)
(72) Inventor: BJÖRKNER, Jörgen, 129 42 Hägersten (SE)
(74) Representative: Hewett, Jonathan Michael Richard
(86) International application number: PCT/SE2005/002058
(87) International publication number: WO 2006/071193

(56) References cited:
- EP-A- 1 077 578
- US-A1- 2002 077 107
- US-A1- 2002 081 179
- US-A1- 2003 140 169
- US-A1- 2003 165 227
- US-A1- 2004 229 601

## Description

### Field of the invention

The invention generally relates to the area of call establishment in communication networks, and more specifically to a method in a communication server, a communication server, a system and a computer program product, for increasing subscription transparency for a subscriber.

### Background art

When setting up connections in communication networks there is generally a default route along which the connection is set up. For example, when placing a call from a mobile terminal attached to a mobile network in which a mobile terminal is roaming, the call will be set up via the network in which the mobile terminal is roaming.

The default route might not be the optimal route, e.g. in terms of cost effectiveness from the subscriber's point of view.

In prior art, this has e.g. been addressed by having a possibility of attaching the mobile terminal to another roaming network having lower prices. However, this requires the subscriber to be aware of the costs for placing calls from different roaming operators, which is cumbersome and unpractical.

Hence, in some prior art location based routing have been suggested, where a mobile terminal is provided with routing information and connections are established between the terminal and another terminal based on the location of the mobile terminal and the routing information dependent of the location of the terminal.

However, problems still remain, as location based routing generally requires alteration of call control functions in the communication devices in which it is to be implemented.

Hence, there is a need for location based routing which can be implemented in communication devices without the need to alter the call control functions in the communication devices.

Furthermore, the utilization of multiple local subscriber identity module (SIM) cards has also been suggested, i.e. allowing the use of local mobile subscriptions belonging to the network where the user currently is present. The advantage of using local SIM cards is that there is no extra charge (roaming charge) added to the call setup cost, and no extra cost of receiving calls, which is the case if the users home network SIM card would be used. Typically the rates of placing national calls also are much more beneficial if a local SIM card is used. Alternatively a dual mode telephone, i.e. a single device which logically includes two different phones which may each be attached to a different network, may be used instead of two SIM cards to avoid high calling costs. For example a dual mode mobile terminal may be a mobile terminal with GSM and Wireless LAN capabilities may be used.

A problem of using a local SIM card or dual mode phones is that each SIM card or logical phone in a dual mode phone is associated with a phone number to be used to reach the phone where the SIM card is used or logical phone is active. This means that if a user switches SIM cards in the mobile phone or activates a logical phone, all people communicating with the user need to be made aware of this new number. Merely diverting the calls directed to the normal phone number to the phone number of the local SIM would not lead to the desired cost saving. Another problem is that when the user calls other parties an unknown calling party number will be presented to the called party, that would expect the normal phone number of the calling party to be displayed. Document US 2004/229601 A1 refers to a method and system allowing for one mobile phone number (MSISDN) to be associated with a plurality of wireless devices.

Document US 2003/140169 A1 relates to a communications network comprising a connection data store for storing a list of addresses accessible in the network, and associated with each address a list of connection types indicating the types of connection that can be made to that address, and associated with at least some of the pairings of address and connection type a respective identity of a terminal connected in the network.

### Summary of the invention

An object of the invention is to alleviate the problems of the prior art. The invention is defined by independent claims 1, 8, 14 and 19, wherein claim 1 relates to a method in a communication server, claim 8 to a communication server, claim 14 to a system comprising the communication server and a mobile terminal, and claim 19 to a computer program product.

The invention increases subscription transparency when using multiple local SIM cards or logical phones in dual mode mobile terminal. For example it allows the use of local mobile subscriptions belonging to the network where the user currently is present without a need for using different phone numbers. It also allows a user to place voice over IP calls using a wireless LAN if it is available. One advantage of using local SIM cards or wireless LAN is that there is no extra charge (roaming charge) added to the call setup cost, and no additional cost of receiving calls, which is the case if the users home network SIM card would be used when roaming in another network. Typically the rates of placing national calls also are much more beneficial if a local SIM card is used.

Sending an association between the identifier of the user and the identifier of the current SIM card or logical phone to a communication server facilitates a central storage in the communication server of current SIM cards and logical phones of users. This is useful e.g. in the case where the user temporary loans a specific SIM card. Calls to a default phone number of the user can be directed to the central communication server and diverted to a phone number associated with the current SIM card or logical phone in the mobile terminal used by the user.

The communication from the mobile terminal to the communication server need only comprise sufficient information to associate the user with the current SIM card or logical phone. For example, it would be enough to send an association of an identification of the user and an identification of the current SIM card, if the default phone number of the user and the phone number associated with the current SIM card, and respective associations to the identification of the user and the current SIM card is stored in the communication server. The identification of the SIM card is e.g. the international mobile subscription identity (IMSI). A logical phone may be identified using an telephone number, voice over ip address, for example a SIP address or other identifier.

In an embodiment, a routing table from the communication server is received in the mobile terminal. The routing table indicates a preferred routing for outgoing calls.

Call establishment is affected by the routing table. For example, when receiving a request to establish a call from the mobile terminal to a called phone number, the establishment of the call is normally initiated via a default route. However, if the route according the preferred routing indicated by the routing table, differs from the default route, the establishment of the call via the default route is interrupted, and the call is established according to the preferred routing indicated by the routing table. If a dual (or multi) mode phone is used the routing table also may indicate which of the logical phones to be used to set up the call. The routing table may include various number transformations to be applied on the dialled number, for example stripping or adding digits. It may also contain information on which authentication method to use to authenticate the call if an alternative route is selected. It also may contain information on how the call is to be established to the routing server by using a traditional call setup, place a call to the routing server to trigger a call-back call, use voice over IP and wireless LAN or use a data connection to the routing server to trigger a call back call. The routing table may also contain an ordered list of fallback routes and preferences among these, for example: First a wireless LAN route should be established. In case this is not possible, a route through the routing server should be used. If this is not possible the default route should be used.

In alternative, call establishment can be performed without the call establishment via the default route being initiated, i.e. by means of routing according to the preferred route indicated by the routing table directly.

In one embodiment the routing table indicates that outgoing calls from the mobile terminal should be established via the communication server.

Establishing user placed calls from the mobile terminal via the communication server is beneficial when a current SIM card is used that is associated with a phone number which differs from a default number of the user as it enables further subscription transparency. It is also useful if another logical phone is to be used. In such a case the phone number associated with the current SIM card would be a current phone number of the user. Calls placed by the user via the communication server could then be adapted in such a way that the calling party number, i.e. the users phone number, sent to the called party for presentation, is not the current number as it would be without adaptation, but the default number. If the default phone number of the user, the current phone number of the user, and an association there between are stored in the communication server, the current phone number can be replaced with the default number of the user as the call is established via the communication server.

Multiple methods of call establishment with the routing server are supported: 1) Call setup with alternative phone number, where the routing table indicates an alternative phone number to connect the call to. 2) Call setup triggered call-back, where the routing table indicates a number used to call to trigger a call-back call to be set up by the routing server to the mobile phone. 3) Use of specific logical phone, for example voice over IP phone in a dual mode phone. 4) Data connection triggered call-back where a data connection to the routing server trigger a call back call to be set up.

The invention includes a mechanism to hide the rerouting occurring for the end-user. From a user perspective the call is placed as normal, and the call is transparently re-routed in the background of the end-user. In the case of call-back connections with the routing server the invention hides this as well and automatically answers the incoming call from the routing server, the end user perceives the call setup as a normal placed call.

The detecting of the identifier of the current SIM card or logical phone may be done at any time, but is preferably done in response to the activation of the current SIM card or start of the logical phone, such as when the phone is powered on.

In one embodiment of the invention, the mobile terminal is arranged to receive two or more SIM cards. This may e.g. be a first SIM card associated with a subscription in a home network and a second SIM card associated with a subscription in a often visited network. The mobile phone is arranged to selectively activate one of two or more SIM cards in the mobile terminal for use in communication. This can be done manually by the user or automatically in response to information of the current network. In such a case, the current SIM card is the currently activated SIM card, and the determining would generally take place each time a change of currently activated SIM card occurs. The selection of SIM card to be activated can be done by considering the current location of the phone such as country and current mobile network. The same logic applies in selection of a logical phone in the case of a dual-mode phone.

According to an aspect of the invention a communication server as according to claim 8 and a method in a communication server as according to claim 1 are provided.

In an embodiment, a routing table indicating a preferred routing for establishment of outgoing calls from the mobile terminal is created in the communication server based on the current SIM card or currently active logical phones in the mobile terminal. The routing table is the sent to the mobile terminal.

For a case where the current phone number of the user is different from the default phone number, outgoing calls from the mobile terminal are preferably established via the communication server. Hence, the routing table sent to the mobile terminal would then indicate a preferred routing of outgoing calls to be via the communication server.

When a call establishment request is received in the communication server from the current phone number to a called phone number, the default phone number instead of the current phone number of the user is preferably provided by the communication server to the called phone number when the call is established.

Replacing the current phone number with the default phone number provides further subscription transparency for mobile terminal user, as a call from the user to a called party would be perceived by the called party as a call from default number of the user already when the call is received.

Furthermore, a least cost route for establishing outgoing calls from the mobile terminal to a called phone number can be determined in the communication server. As an example, the routing table can comprise routing information stating that for in some cases, an outgoing call from the mobile terminal should be established via the communication server and then via the least cost route to the called phone number.

Transparency with respect to incoming calls to the user of the mobile terminal can also be increased. More specifically, an incoming call establishment request to the user of the mobile terminal directed to the default phone number of the user can be directed first to the communication server. Using the stored information regarding default and current phone number of the user, the incoming call is established to the current phone number of the user instead of the default phone number of the user.

As for outgoing calls, a least cost route can be determined in the communication server also for establishing the incoming call to the current phone number of the user.

For outgoing calls other services associated with the user may be executed by the routing server such as number translation, call policy enforcement or other call origination services.

In alternative, in an example useful for understanding the invention, or as a supplement, to sending a communication indicating an association between the identifier of the user and the identifier of the current SIM card or logical phone from a mobile terminal to a communication server, an administrative system can be used. In the administrative system, information associating an identifier of the user and an identifier of a current SIM card can sent to the communication server, e.g. by personnel at a SIM card loaning centre when the user loans the current SIM card, or a system administrator.

In cases where calls are established via the communication server, e.g. when a SIM card is used which is associated with a phone number which is not the default phone number of the user, the communication server may gather statistics regarding the established calls. The statistics can be used for analysis of general call behaviour, call behaviour of specific users, for charging functionality etc.

In particular, information regarding called phone number and duration of the call, can be stored for each call established from the mobile terminal of the user using a SIM card which is associated with a phone number which is not the default phone number of the user. The information can then be associated with the user.

### Brief description of the drawings

In the following embodiments of the invention will be described in detailed with reference to the enclosed drawings, in which:
Figure 1 shows a schematic diagram of a system in which the invention may be implemented;
Figure 2 shows a schematic diagram of another system in which the invention may be implemented;
Figure 3 shows a flow chart of an embodiment of a method according to the invention; and
Figure 4 shows a flow chart of another embodiment of a method according to the invention.

### Detailed description

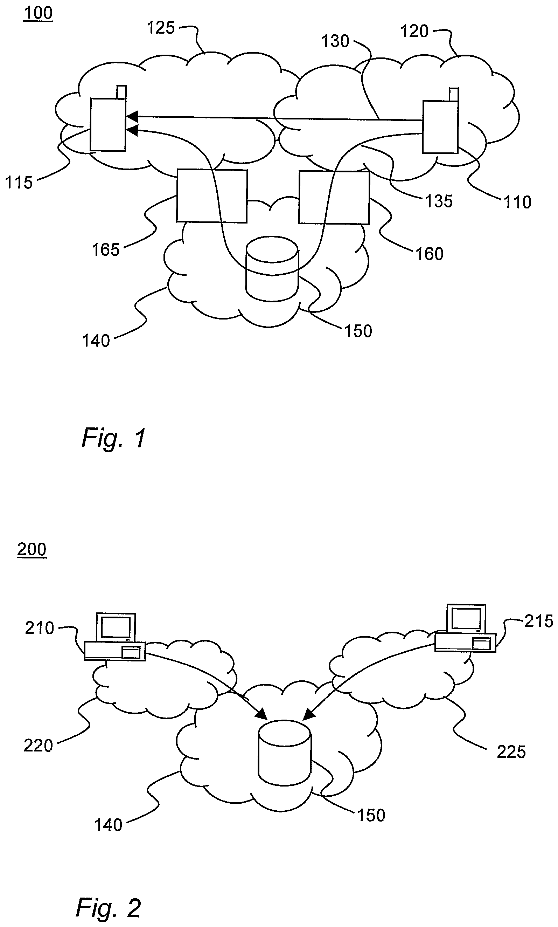

Embodiments of the invention can be implemented in a system 100 as disclosed in figure 1.

In the system 100 there is a first mobile terminal 110 and a second mobile terminal 115. The first mobile terminal 110 is attached to a first mobile network 120, and the second mobile terminal 115 is attached to a second mobile network 125.

A call from the first mobile terminal 110 to the second mobile terminal 115, is normally routed through the first mobile network 120 and the second mobile network 125 via a normal route 130.

In addition to the normal route 130 a call from the first mobile terminal 110 to the second mobile terminal 115 can be established via an alternative route 135 through an alternative network 140 via a communication server 150 using a first gateway 160 and a second gateway 165 between the networks. The elements 150, 160 and 165 may be combined together in a single node or put in separate locations.

The alternative route may e.g. be a route which is less expensive than the default route. For example, the alternative route may be through an Internet Protocol (IP) network. In such a case the gateways 160 and 165 are between an IP network 140 and the first mobile network 120 and the second mobile network 125, respectively. If for example, the first mobile network 120 and the second mobile network 125 are in two different countries, the routing of the call through the IP network 140 for the international part of the connection would be considerably less expensive than the default route 130. The same would normally be true for the case where the second network 125 is a POTS network. The gateways can also be used to select between different trunks to use for the calls to be set up based on the routing information in the routing server 150.

The communication server 150 comprises routing information indicating presence of preferred alternative routes. The routing information is used to generate a routing table which is transmitted to the first terminal 110.

When a user of the first mobile terminal 110 places a call to the user of the second mobile terminal 115, the establishment of the call via the default route 130 is initiated through a call control logic (not shown) of the first mobile terminal 110. An alternative routing logic (not shown) receives the information that a call establishment procedure has been initiated and the routing table obtained from the communication server 150 is checked for preferred alternative routes 135. The decision on whether to use an alternative route 135 could e.g. be based on the cost of routing the call via route 130 and the cost for the alternative route 135.

The alternative routing logic may use a dial plan stored on the mobile terminal to resolve the preferred route to the destination. The plan comprises a set of rules used to express matching criteria to determine if which route should be used, alternative or default.

Input to destination queries are e.g. the destination address (called phone number), current network where the user is located and the country where the user is located. The set of rules comprises matching conditions to be used to operate on those input values. Such operands may be of the form of regular expressions. The output of the query is a potential gateway 160 (intermediate route) to be used to route the call, type of signalling to use to transfer the original destination number to such gateway 160 and type of authentication to use with the gateway 160.

The dial plan may describe several alternative routes to a destination, and contains information to allow the client to prioritize among those. Such information is price and quality parameters.

If it is determined that the alternative route 135 should be used, the client 110 will send an instruction to the call control logic, indicating that the establishment of the call via the default route 130 should be interrupted, and the call will be established through the alternative route 135.

Before setting up the call via the alternative route 135, an authorization procedure is preferably performed through the gateway 160 to the other network 140.

In alternative to first initiating the call establishment via the default route 130 and then interrupting it, the alternative routing logic can be integrated in the call control logic in such a way that the decision of using an alternative route or not is made before the establishment is initiated.

If it is not possible to set up the call via the alternative route 135, e.g. due to errors, the default route 130 is used.

The terminal 110 may be provided with authorization functionality. Furthermore, all information relating to the alternative routing may be encrypted.

One example of principle for alternative routing which can be used separately, is alternative routing in case of roaming. In this case, a number of different networks can be used for roaming. When selecting the network to use for roaming, cost information, which e.g. can be stored in the mobile terminal, for the number of networks is used together with information regarding the SIM card of the mobile terminal. The cost information can be updated, e.g. by retrieval of updates from a central communication server.

In an embodiment of the invention managing situations are managed where a user of a mobile terminal 110 can temporarily loans a SIM card which is not her/his default SIM card. The loaning of SIM cards may e.g. be provided within in a multinational organisation/enterprise, e.g. by provision of loaner SIM cards at receptions on the premises of the organisation/enterprise in each country/region or at some other suitable location, such as an air port, train station, or other central location. A benefit of the use of loaner SIM cards is that the user can use SIM cards associated with local subscriptions and hence avoid the increased cost associated with the roaming needed when using SIM cards associated with non-local subscriptions.

The mobile terminal 110 comprises an application which detects identifications of an active SIM card. Furthermore, stored on the mobile terminal 110 is also a unique identification of the user of the mobile terminal. When a user inserts a loaned SIM card in the mobile phone 110, the application in the mobile phone detects the activation of the SIM card and the identification of the SIM card, e.g. in the form of an IMSI, and automatically registers that the user can now be reached at the phone number of the loaner SIM card, by sending a communication to the communication server 150 indicating an association between the identifier of the user and the identifier (IMSI) of the SIM card.

The application further comprises alternative routing logic, which is arranged to receive, interpret and store routing information received in a routing table from the communication server 150 via a receiver in the mobile terminal 110. In the case of a loaner SIM card the routing table will normally simply indicate that all calls established from the mobile terminal 110 should be established via the communication server 150.

The communication server 150 comprises association of the user with a default phone number and an association of loaner SIM cards with respective phone numbers. When receiving a communication from the mobile terminal 110 indication the new association, the communication server 150 will update its redirect rules to forward all incoming calls to the default number of the user to the phone number associated with the loaner SIM card.

When a call is placed to the default phone number of the user, the call will be directed to the communication server 150. Because of the SIM change registration, the communication server 150 knows that the user is reached on the phone number associated with the loaner SIM card. Incoming calls are routed to the communication server 150 either because the default phone number of a user is an extension number that always routes incoming calls to the communication server 150, or that the default SIM card subscription has a call divert rule that forwards calls on no answer to the communication server 150.

When a user places a call with an active loaner SIM card, the alternative routing logic will make sure that all calls being placed is routed through the communication server 150. This server 150 will rewrite the calling party number displayed to the called party to be the default number of the user.

When the user returns the loaner SIM card and inserts the default SIM card to the mobile terminal 110, the communication server 150 is updated to route incoming calls to this number.

Furthermore, the invention may be advantageously used in connection with mobile terminals arranged to receive two or more SIM cards, and to selectively activate one of the two or more SIM cards for use in communication. In such a case SIM cards associated with different subscriptions may be manually or automatically activated in order to minimize costs. For example, SIM cards associated with subscriptions in countries often visited by the user may be inserted in the mobile terminal and selectively activated when the user visits the respective country. For this type of mobile terminals, the current SIM card is the currently activated SIM card.

Dual (or multi) mode functionality in a mobile terminal, e.g. a dual mode mobile terminal having both GSM and WLAN capability, may be used instead of or in combination with alternative SIM cards associated with different subscriptions. In such a case, in addition to the selection of routing through the default route 130 in the system 100, the connection to the gateway 160 may be alternatively done either via a GSM network or via a WLAN network. Such an alternative connection may be selected dynamically at call set up by means of information in the routing table.

Embodiments of the invention can also be implemented in a system 200 as disclosed in figure 2.

In alternative, in an example, as a supplement to the sending of the association of an identification of a user and an identification of a SIM card, a SIM inventory management system 200 as shown in figure 2 can be used. The system is used to manage parameters such as:
- Service provider information
- Location information of subscription
- Subscription mobile phone number
- SIM card IMSI number

The inventory management system can be web provisioned by personnel responsible of the management of the physical loaner SIM cards. The information is stored in the communication server.

When a user arrives, in for example a new country, a loaner SIM card can be picked up at one of a number of loaner SIM card receptions. The receptions have computers 210, 215 which are connected to a respective local network 220, 215 which in turn is connected to a network 140 in which a communication server 150 is present. The personnel at the reception have access to the communication server and updates the information in the communication server 150 with the identification of the SIM card the user receives and an identification of the user and updates this. This allows the communication server 150 to keep track of a current association between users and SIM cards.

As all calls to and from the mobile terminal 110 of the user will be routed via the communication server 150 when the user uses a loaner SIM card, the communication server 150 is preferably also provided with call statistic gathering functionality. The statistics can be used for analysis of general call behaviour, call behaviour of specific users, for charging functionality etc.

Similarly, when a user activates a logical phone of a dual (or multi) mode mobile terminal, the communication server 150 is provided with an identification of the user and an identification of the currently used logical phone. All calls to and from the mobile terminal may then be routed via the communication server.

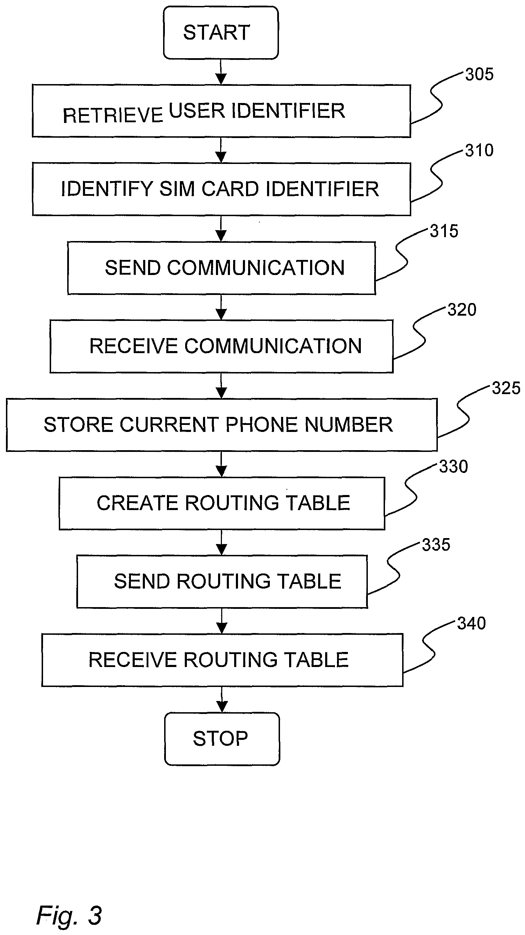

In figure 3 a flow chart of an embodiment of a method according to the invention is shown. In step 305 an identifier of a user of a mobile terminal is retrieved from memory. When a current SIM card is activated, an identifier of the current SIM card is identified in the mobile terminal in step 310. A communication indicating an association between the identifier of the user and the identifier of the current SIM card is sent to a communication server in step 315.

The user is associated with a default phone number in the communication server. The default number may e.g. be associated with the communication server directly or with a default SIM card of the user as described further below. The communication from the mobile terminal is received and interpreted in the communication server in step 320. A phone number associated with the current SIM card is identified and stored in the communication server as a current phone number of the user in step 325. Based on the current SIM card, a routing table indicating a preferred routing for establishing outgoing calls from the mobile terminal with the current SIM card is created in the communication terminal in step 330. When the current phone number of the user is different from the default phone number of the user, the routing table may e.g. indicate that outgoing calls from the mobile terminal should be established via the communication server.

The routing table is then sent from the communication server to the mobile terminal in step 335, and the routing table from the communication server is received and interpreted in the mobile terminal in step 340.

Furthermore, the creation, sending, receiving and interpreting of the routing table in the steps 330, 335 and 340 may be omitted. Instead, an alternative routing logic can be used in an application of the mobile terminal. Such an alternative routing logic can for example be governed by the current location of the mobile terminal.

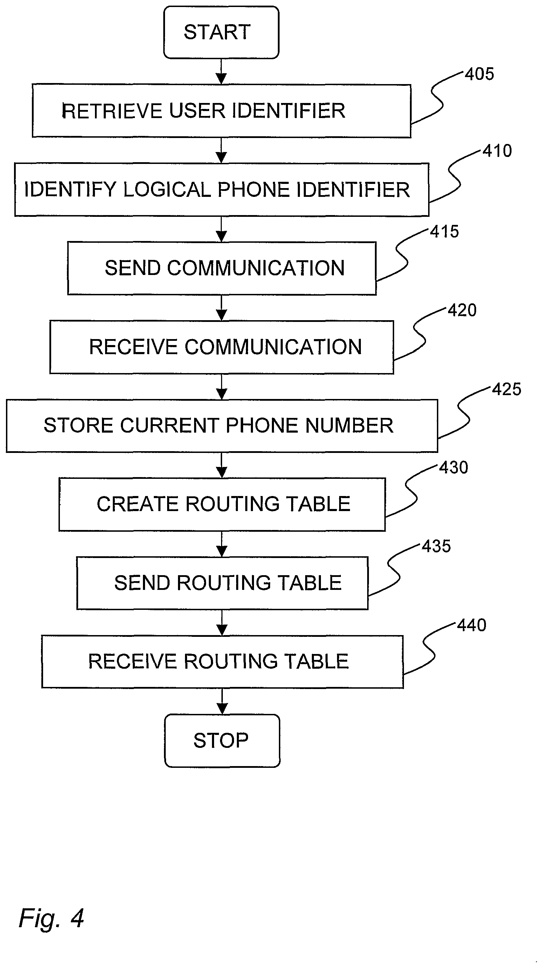

In figure 4 a flow chart of another embodiment of a method according to the invention is shown. In step 405 an identifier of a user of a mobile terminal is retrieved from memory. When a logical phone of two or more logical phones in the mobile terminal is activated for use, an identifier of a currently used logical phone is identified in the mobile terminal in step 410 as the logical phone activated for use. A communication indicating an association between the identifier of the user and the identifier of the currently used logical phone is sent to a communication server in step 415.

The user is associated with a default phone number in the communication server. The default number may e.g. be associated with the communication server directly or with a default logical phone of the user as described further below. The communication from the mobile terminal is received and interpreted in the communication server in step 420. A phone number associated with the currently used logical phone is identified and stored in the communication server as a current phone number of the user in step 425. Based on the currently used logical phone, a routing table indicating a preferred routing for establishing outgoing calls from the mobile terminal with the currently used logical phone is created in the communication terminal in step 430. When the current phone number of the user is different from the default phone number of the user, the routing table may e.g. indicate that outgoing calls from the mobile terminal should be established via the communication server.

The methods described with reference to figure 3 and figure 4, respectively, may be used separately or in combination.

In an example, a mobile terminal is used having two or more different capabilities for communication, e.g. GSM and WLAN. At call set up when a user dials a number, the number is compared with the routing table. The routing table then indicates the preferred way of setting up the call based on e.g. lowest cost. The alternative ways may then be:
a) Using GSM SIM card direct
b) Using GSM SIM card but routed through the routing server
c) Using other logical phone present in the device, i.e. voice over IP application and WLAN network The routing table holds information of how the call setup to the routing server is to be performed, and fall-back methods in the case on method would fail, i.e. if voice over IP and WLAN network is preferred but fails, the next preferred alternative, e.g. GSM routed through the routing server, is selected.

Further to the above, the association of the user with the phone number associated with the current SIM card is used for incoming calls to the user. Incoming calls are routed to the communication server, e.g. because the default phone number of a user is an extension number that always routes incoming calls to the communication server, or that the default SIM card subscription has a call divert rule that forwards calls on no answer to the communication server. The association of the user with the phone number of the current SIM card is then used in the communication server to route the call to the phone number associated with the current SIM card.

## Claims

1. A method in a communication server (150) for enabling association of a default phone number of a mobile terminal user with either:
a phone number associated with an active subscriber identity module, SIM, card, wherein the active SIM card is a SIM card currently used for communication in a mobile terminal (110), or
a phone number associated with an active communication mode, wherein the active communication mode is one of a GSM or WLAN communication modes of the mobile terminal (110) which is currently used for communication in the mobile terminal (110), the method comprising:
storing a default phone number of the user;
receiving and interpreting (320, 420) a communication from the mobile terminal (110) used by the user, the communication indicating an association between an identifier of the user and either an identifier of the active SIM card of the mobile terminal (110) or the phone number of the active communication mode of the mobile terminal (110); and
storing (325, 425) a phone number associated with the received identifier of the active SIM card or the phone number of the active communication mode as a current phone number of the user, such that an incoming call establishment request to the default phone number of the user, from a calling phone number, causes the incoming call to be established with the current phone number of the user instead of the default phone number.

2. The method according to claim 1, further comprising:
creating (330, 430), based on the active SIM card or the active communication mode, a routing table indicating a preferred routing for establishing outgoing calls from the mobile terminal (110) with the active SIM card or the active communication mode; and
sending (335, 435) the routing table to the mobile terminal (110).

3. The method according to claim 1 or claim 2, wherein the routing table indicates that outgoing calls should be established via the communication server (150) when the current phone number of the user is different from the default phone number of the user.

4. The method according to any one of claims 1-3, further comprising:
receiving an outgoing call establishment request from the current phone number of the user to a called phone number; and
providing the default phone number instead of the current phone number of the user to the called phone number when establishing the outgoing call.

5. The method according to claim 4, further comprising:
determining a least cost route for establishing the outgoing call to the called phone number; and
establishing the outgoing call to the called phone number via the least cost route.

6. The method according to claim 1, further comprising:
determining a least cost route for establishing the incoming call to the current phone number of the user, wherein the incoming call is established to the current phone number via the least cost route.

7. The method according to any one of claims 1-6, further comprising:
measuring and storing statistics regarding calls established via the communication server (150).

8. A communication server (150) for enabling association of a default phone number of a mobile terminal user with either:
a phone number associated with an active subscriber identity module, SIM, card, wherein the active SIM card is a SIM card currently used for communication in a mobile terminal (110), or
a phone number associated with an active communication mode, wherein the active communication mode is one of a GSM or WLAN communication modes of the mobile terminal (110) which is currently used for communication in the mobile terminal (110), comprising;
a receiving means arranged to receive and interpret a communication from the mobile terminal (110) used by the user, the communication indicating an association between an identifier of the user and either an identifier of the active SIM card of the mobile terminal (110) or the phone number of the active communication mode of the mobile terminal (110);
a storage means arranged to store a default phone number of the user and to store a phone number associated with the received identifier of the active SIM card or the phone number of the active communication mode as a current phone number of the user; and
a call establishment means arranged to receive an incoming call establishment request to the default phone number of the user from a calling phone number, determine that the incoming call should be established with the current phone number of the user instead of the default phone number, and establish the incoming call to the current phone number of the user.

9. The communication server (150) according to claim 8, further comprising:
a processing means arranged to create, based on the active SIM card or the active communication mode, a routing table indicating a preferred routing for establishing outgoing calls from the mobile terminal (110) with the active SIM card or the active communication mode; and
a sending means arranged to send the routing table to the mobile terminal (110).

10. The communication server (150) according to claim 9, wherein the processing means is arranged to create a routing table indicating that outgoing calls should be routed via the communication server (150) when the current phone number of the user is different from the default phone number of the user.

11. The communication server (150) according to any one of claims 8-10, wherein the call establishment means is arranged to receive an outgoing call establishment request from the current phone number of the user to a called phone number, and to provide the default phone number instead of the current phone number of the user to the called phone number when establishing the outgoing call.

12. The communication server (150) according to any one of claims 8 to 11, wherein processing means is further arranged to determine a least cost route for establishing the incoming call to the current phone number of the user, and to instruct the establishing means to establish the incoming call to the current phone number via the least cost route.

13. The communication server (150) according to any one of claims 8-12, further comprising:
means measuring and storing statistics regarding calls established via the communication server (150).

14. A system (100) comprising the communication server (150) of any one of claims 8 to 13, and a mobile terminal (110), the mobile terminal (110) comprising:
a storage means arranged to store an identifier of a user of the mobile terminal (110);
a detection means arranged to detect an identifier of an active SIM card of the mobile terminal (110) or the phone number of an active communication mode of the mobile terminal (110); and
a sending means arranged to send the communication to the communication server (150).

15. The system (100) according to claim 14, wherein the mobile terminal (110) further comprises:
a receiving means for receiving and interpreting a routing table from the communication server (150), the routing table indicating a preferred routing of outgoing calls.

16. The system (100) according to claim 14 or claim 15, wherein the detecting means is arranged to detect the identifier of the active SIM card or the active communication mode in response to the activation of the active SIM card or the active communication mode.

17. The system (100) according to any one of claims 14 to 16, wherein the mobile terminal (110) is further arranged to receive two or more SIM cards or communication modes, and to selectively activate one of the two or more SIM cards or communication modes for use in communication, wherein the active SIM card is the currently activated SIM card.

18. The system (100) according to any one of claims 14 to 17, wherein the mobile terminal (110) is further arranged to select a network (125, 140) for roaming of a number of selectable networks (125, 140), the selection being based on cost information stored in the mobile terminal (110) for the number of networks (125, 140) and on the active SIM card or the active communication mode.

19. A computer program product comprising computer-executable instructions for performing the steps of the method according to any one of claims 1-7.

## Patentansprüche

1. Verfahren in einem Kommunikationsserver (150) zum Ermöglichen der Zuordnung einer Standardtelefonnummer eines Benutzers eines mobilen Endgerätes zu entweder:
einer Telefonnummer, die einer aktiven Teilnehmeridentitätsmodul-Karte (SIM-Karte) zugeordnet ist, wobei die aktive SIM-Karte eine SIM-Karte ist, die aktuell zur Kommunikation in einem mobilen Endgerät (110) verwendet wird, oder
einer Telefonnummer, die einem aktiven Kommunikationsmodus zugeordnet ist, wobei der aktive Kommunikationsmodus einer von einem GSM- oder WLAN-Kommunikationsmodus des mobilen Endgerätes (110) ist, der aktuell zur Kommunikation in dem mobilen Endgerät (110) verwendet wird,
wobei das Verfahren Folgendes umfasst:
Speichern einer Standardtelefonnummer des Benutzers;
Empfangen und Interpretieren (320, 420) einer Kommunikation von dem mobilen Endgerät (110), das von dem Benutzer verwendet wird, wobei die Kommunikation eine Zuordnung zwischen einer Kennung des Benutzers und entweder einer Kennung der aktiven SIM-Karte des mobilen Endgerätes (110) oder der Telefonnummer des aktiven Kommunikationsmodus des mobilen Endgerätes (110) anzeigt; und
Speichern (325, 425) einer Telefonnummer, die der empfangenen Kennung der aktiven SIM-Karte oder der Telefonnummer des aktiven Kommunikationsmodus als aktuelle Telefonnummer des Benutzers zugeordnet ist, sodass eine Anforderung für den Aufbau eines ausgehenden Anrufs mit der Standardtelefonnummer des Benutzers von einer anrufenden Telefonnummer dazu führt, dass der eingehende Anruf mit der aktuellen Telefonnummer des Benutzers anstatt mit der Standardtelefonnummer aufgebaut wird.

2. Verfahren nach Anspruch 1, ferner Folgendes umfassend:
Erzeugen (330, 430) einer Routingtabelle, die ein bevorzugtes Routing für das Aufbauen von von dem mobilen Endgerät (110) mit der aktiven SIM-Karte oder dem aktiven Kommunikationsmodus ausgehenden Anrufen anzeigt, basierend auf der aktiven SIM-Karte oder dem aktiven Kommunikationsmodus; und
Senden (335, 435) der Routingtabelle an das mobile Endgerät (110).

3. Verfahren nach Anspruch 1 oder Anspruch 2, wobei die Routingtabelle anzeigt, dass ausgehende Anrufe über den Kommunikationsserver (150) aufgebaut werden sollen, wenn die aktuelle Telefonnummer des Benutzers sich von der Standardtelefonnummer des Benutzers unterscheidet.

4. Verfahren nach einem der Ansprüche 1-3, ferner Folgendes umfassend:
Empfangen einer Anforderung für den Aufbau eines ausgehenden Anrufs von der aktuellen Telefonnummer des Benutzers an eine angerufene Telefonnummer; und
Bereitstellen der Standardtelefonnummer anstatt der aktuellen Telefonnummer des Benutzers für die angerufene Telefonnummer, wenn ein ausgehender Anruf aufgebaut wird.

5. Verfahren nach Anspruch 4, ferner Folgendes umfassend:
Bestimmen einer kostengünstigsten Route für den Aufbau des ausgehenden Anrufs an die angerufene Telefonnummer; und
Aufbauen des ausgehenden Anrufs an die angerufene Telefonnummer über die kostengünstigste Route.

6. Verfahren nach Anspruch 1, ferner Folgendes umfassend:
Bestimmen einer kostengünstigsten Route für den Aufbau des eingehenden Anrufs an die aktuelle Telefonnummer des Benutzers, wobei der eingehende Anruf an die aktuelle Telefonnummer über die kostengünstigste Route aufgebaut wird.

7. Verfahren nach einem der Ansprüche 1-6, ferner Folgendes umfassend:
Erstellen und Speichern von Statistiken, die über den Kommunikationsserver (150) aufgebaute Anrufe betreffen.

8. Kommunikationsserver (150) zum Ermöglichen der Zuordnung einer Standardtelefonnummer eines Benutzers eines mobilen Endgerätes zu entweder:
einer Telefonnummer, die einer aktiven Teilnehmeridentitätsmodul-Karte (SIM-Karte) zugeordnet ist, wobei die aktive SIM-Karte eine SIM-Karte ist, die aktuell zur Kommunikation in einem mobilen Endgerät (110) verwendet wird, oder
einer Telefonnummer, die einem aktiven Kommunikationsmodus zugeordnet ist, wobei der aktive Kommunikationsmodus einer von einem GSM- oder WLAN-Kommunikationsmodus des mobilen Endgerätes (110) ist, der aktuell zur Kommunikation in dem mobilen Endgerät (110) verwendet wird,
Folgendes umfassend:
eine Empfangseinrichtung, die angeordnet ist, um eine Kommunikation von dem mobilen Endgerät (110), das von dem Benutzer verwendet wird, zu empfangen und zu interpretieren, wobei die Kommunikation eine Zuordnung zwischen einer Kennung des Benutzers und entweder einer Kennung der aktiven SIM-Karte des mobilen Endgerätes (110) oder der Telefonnummer des aktiven Kommunikationsmodus des mobilen Endgerätes (110) anzeigt;
eine Speichereinrichtung, die angeordnet ist, um eine Standardtelefonnummer des Benutzers zu speichern und eine Telefonnummer, die mit der empfangenen Kennung der aktiven SIM-Karte oder der Telefonnummer des aktiven Kommunikationsmodus zugeordnet ist, als aktuelle Telefonnummer des Benutzers zu speichern; und
eine Anrufsaufbaueinrichtung, die angeordnet ist, um eine Anforderung für den Aufbau eines eingehenden Anrufs von einer anrufenden Telefonnummer an die Standardtelefonnummer des Benutzers zu empfangen, zu bestimmen, dass der eingehende Anruf mit der aktuellen Telefonnummer des Benutzers anstatt der Standardtelefonnummer aufgebaut werden soll, und den eingehenden Anruf mit der aktuellen Telefonnummer des Benutzers aufzubauen.

9. Kommunikationsserver (150) nach Anspruch 8, ferner Folgendes umfassend:
eine Verarbeitungseinrichtung, die angeordnet ist, um basierend auf der aktiven SIM-Karte oder dem aktiven Kommunikationsmodus eine Routingtabelle zu erzeugen, die ein bevorzugtes Routing für den Aufbau ausgehender Anrufe von dem mobilen Endgerät (110) mit der aktiven SIM-Karte oder dem aktiven Kommunikationsmodus anzeigt; und
eine Sendeeinrichtung, die angeordnet ist, um die Routingtabelle an das mobile Endgerät (110) zu senden.

10. Kommunikationsserver (150) nach Anspruch 9, wobei die Verarbeitungseinrichtung angeordnet ist, um eine Routingtabelle zu erzeugen, die anzeigt, dass ausgehende Anrufe über den Kommunikationsserver (150) geroutet werden sollen, wenn die aktuelle Telefonnummer des Benutzers sich von der Standardtelefonnummer des Benutzers unterscheidet.

11. Kommunikationsserver (150) nach einem der Ansprüche 8-10, wobei die Anrufsaufbaueinrichtung angeordnet ist, um eine Anforderung für den Aufbau eines ausgehenden Anrufs von der aktuellen Telefonnummer des Benutzers an eine angerufene Telefonnummer zu empfangen, und für die angerufene Telefonnummer eine Standardtelefonnummer anstatt der aktuellen Telefonnummer des Benutzers bereitzustellen, wenn der ausgehende Anruf aufgebaut wird.

12. Kommunikationsserver (150) nach einem der Ansprüche 8 bis 11, wobei die Verarbeitungseinrichtung ferner angeordnet ist, um eine kostengünstigste Route für das Aufbauen des eingehenden Anrufs an die aktuelle Telefonnummer des Benutzers zu bestimmen und um die Aufbaueinrichtung anzuweisen, den eingehenden Anruf an die aktuelle Telefonnummer über die kostengünstigste Route aufzubauen.

13. Kommunikationsserver (150) nach einem der Ansprüche 8-12, ferner Folgendes umfassend:
Einrichtungen, die Statistiken erstellen und speichern, die Anrufe betreffen, die über den Kommunikationsserver (150) aufgebaut werden.

14. System (100), den Kommunikationsserver (150) nach einem der Ansprüche 8 bis 13 und ein mobiles Endgerät (110) umfassend, wobei das mobile Endgerät (110) Folgendes umfasst:
eine Speichereinrichtung, die angeordnet ist, um eine Kennung eines Benutzers des mobilen Endgerätes (110) zu speichern;
eine Erkennungseinrichtung, die angeordnet ist, um eine Kennung einer aktiven SIM-Karte des mobilen Endgerätes (110) oder der Telefonnummer eines aktiven Kommunikationsmodus des mobilen Endgerätes (110) zu erkennen; und
eine Sendeeinrichtung, die angeordnet ist, um die Kommunikation an den Kommunikationsserver (150) zu senden.

15. System (100) nach Anspruch 14, wobei das mobile Endgerät (110) ferner Folgendes umfasst:
eine Empfangseinrichtung, um eine Routingtabelle von dem Kommunikationsserver (150) zu empfangen und zu interpretieren, wobei die Routingtabelle ein bevorzugtes Routing von ausgehenden Anrufen anzeigt.

16. System (100) nach Anspruch 14 oder Anspruch 15, wobei die Erkennungseinrichtung angeordnet ist, um die Kennung der aktiven SIM-Karte oder des aktiven Kommunikationsmodus als Reaktion auf die Aktivierung der aktiven SIM-Karte oder des aktiven Kommunikationsmodus zu erkennen.

17. System (100) nach einem der Ansprüche 14 bis 16, wobei das mobile Endgerät (110) ferner angeordnet ist, um zwei oder mehr SIM-Karten oder Kommunikationsmodi zu empfangen und um selektiv eine (n) von den zwei oder mehr SIM-Karten oder Kommunikationsmodi für das Verwenden in der Kommunikation zu aktivieren, wobei die aktive SIM-Karte die aktuell aktivierte SIM-Karte ist.

18. System (100) nach einem der Ansprüche 14 bis 17, wobei das mobile Endgerät (110) ferner angeordnet ist, um ein Netz (125, 140) zum Roamen einer Anzahl von auswählbaren Netzen (125, 140) auszuwählen, wobei die Auswahl auf Kosteninformationen, die in dem mobilen Endgerät (110) für die Anzahl von Netzen (125, 140) gespeichert sind, und auf der aktiven SIM-Karte oder dem aktiven Kommunikationsmodus basiert.

19. Computerprogrammprodukt, das von einem Computer ausführbare Anweisungen zum Durchführen der Schritte des Verfahrens nach einem der Ansprüche 1-7 umfasst.

## Revendications

1. Procédé dans un serveur de communication (150) pour permettre l'association d'un numéro de téléphone par défaut d'un utilisateur de terminal mobile avec l'un ou l'autre parmi :
un numéro de téléphone associé à une carte de module d'identité d'abonné, SIM, active, dans lequel la carte SIM active est une carte SIM actuellement utilisée pour une communication dans un terminal mobile (110), ou
un numéro de téléphone associé à un mode de communication actif, dans lequel le mode de communication actif est l'un parmi des modes de communication par système mondial de communications mobiles, GSM, ou par réseau local sans fil, WLAN, du terminal mobile (110) qui est actuellement utilisé pour une communication dans le terminal mobile (110),
le procédé comprenant :
le stockage d'un numéro de téléphone par défaut de l'utilisateur ;
la réception et l'interprétation (320, 420) d'une communication à partir du terminal mobile (110) utilisé par l'utilisateur, la communication indiquant une association entre un identifiant de l'utilisateur et l'un ou l'autre parmi un identifiant de la carte SIM active du terminal mobile (110) ou le numéro de téléphone du mode de communication actif du terminal mobile (110) ; et
le stockage (325, 425) d'un numéro de téléphone associé à l'identifiant reçu de la carte SIM active ou du numéro de téléphone du mode de communication actif en tant que numéro de téléphone actuel de l'utilisateur, de sorte qu'une demande d'établissement d'appel entrant vers le numéro de téléphone par défaut de l'utilisateur, à partir d'un numéro de téléphone appelant, amène l'appel entrant à être établi avec le numéro de téléphone actuel de l'utilisateur au lieu du numéro de téléphone par défaut.

2. Procédé selon la revendication 1, comprenant en outre :
la création (330, 430), sur la base de la carte SIM active ou du mode de communication actif, d'une table de routage indiquant un routage préféré pour l'établissement d'appels sortants à partir du terminal mobile (110) avec la carte SIM active ou le mode de communication actif ; et
l'envoi (335, 435) de la table de routage au terminal mobile (110) .

3. Procédé selon la revendication 1 ou la revendication 2, dans lequel la table de routage indique que les appels sortants doivent être établis via le serveur de communication (150) lorsque le numéro de téléphone actuel de l'utilisateur est différent du numéro de téléphone par défaut de l'utilisateur.

4. Procédé selon l'une quelconque des revendications 1 à 3, comprenant en outre :
la réception d'une demande d'établissement d'appel sortant, du numéro de téléphone actuel de l'utilisateur à un numéro de téléphone appelé ; et
la fourniture du numéro de téléphone par défaut au lieu du numéro de téléphone actuel de l'utilisateur au numéro de téléphone appelé lors de l'établissement de l'appel sortant.

5. Procédé selon la revendication 4, comprenant en outre :
la détermination d'une route la moins coûteuse pour l'établissement de l'appel sortant vers le numéro de téléphone appelé ; et
l'établissement de l'appel sortant vers le numéro de téléphone appelé via la route la moins coûteuse.

6. Procédé selon la revendication 1, comprenant en outre :
la détermination d'une route la moins coûteuse pour l'établissement de l'appel entrant vers le numéro de téléphone actuel de l'utilisateur, dans lequel l'appel entrant est établi vers le numéro de téléphone actuel via la route la moins coûteuse.

7. Procédé selon l'une quelconque des revendications 1 à 6, comprenant en outre :
la mesure et le stockage de statistiques relatives aux appels établis via le serveur de communication (150).

8. Serveur de communication (150) pour permettre l'association d'un numéro de téléphone par défaut d'un utilisateur de terminal mobile avec l'un ou l'autre parmi :
un numéro de téléphone associé à une carte de module d'identité d'abonné, SIM, active, dans lequel la carte SIM active est une carte SIM actuellement utilisée pour une communication dans un terminal mobile (110), ou
un numéro de téléphone associé à un mode de communication actif, dans lequel le mode de communication actif est l'un parmi des modes de communication par système mondial de communications mobiles, GSM, ou par réseau local sans fil, WLAN, du terminal mobile (110) qui est actuellement utilisé pour une communication dans le terminal mobile (110),
comprenant ;
un moyen de réception conçu pour recevoir et interpréter une communication à partir du terminal mobile (110) utilisé par l'utilisateur, la communication indiquant une association entre un identifiant de l'utilisateur et l'un ou l'autre parmi un identifiant de la carte SIM active du terminal mobile (110) ou le numéro de téléphone du mode de communication actif du terminal mobile (110) ;
un moyen de stockage conçu pour stocker un numéro de téléphone par défaut de l'utilisateur et pour stocker un numéro de téléphone associé à l'identifiant reçu de la carte SIM active ou le numéro de téléphone du mode de communication actif en tant que numéro de téléphone actuel de l'utilisateur ; et
un moyen d'établissement d'appel conçu pour recevoir une demande d'établissement d'appel entrant vers le numéro de téléphone par défaut de l'utilisateur à partir d'un numéro de téléphone appelant, déterminer que l'appel entrant doit être établi avec le numéro de téléphone actuel de l'utilisateur au lieu du numéro de téléphone par défaut, et établir l'appel entrant vers le numéro de téléphone actuel de l'utilisateur.

9. Serveur de communication (150) selon la revendication 8, comprenant en outre :
un moyen de traitement conçu pour créer, sur la base de la carte SIM active ou du mode de communication actif, une table de routage indiquant un routage préféré pour l'établissement d'appels sortants à partir du terminal mobile (110) avec la carte SIM active ou le mode de communication actif ; et
un moyen d'envoi conçu pour envoyer la table de routage au terminal mobile (110).

10. Serveur de communication (150) selon la revendication 9, dans lequel le moyen de traitement est conçu pour créer une table de routage indiquant que les appels sortants doivent être routés via le serveur de communication (150) lorsque le numéro de téléphone actuel de l'utilisateur est différent du numéro de téléphone par défaut de l'utilisateur.

11. Serveur de communication (150) selon l'une quelconque des revendications 8 à 10, dans lequel le moyen d'établissement d'appel est conçu pour recevoir une demande d'établissement d'appel sortant, du numéro de téléphone actuel de l'utilisateur à un numéro de téléphone appelé, et pour fournir le numéro de téléphone par défaut au lieu du numéro de téléphone actuel de l'utilisateur au numéro de téléphone appelé lors de l'établissement de l'appel sortant.

12. Serveur de communication (150) selon l'une quelconque des revendications 8 à 11, dans lequel le moyen de traitement est en outre conçu pour déterminer une route la moins coûteuse pour l'établissement de l'appel entrant vers le numéro de téléphone actuel de l'utilisateur, et pour ordonner au moyen d'établissement d'appel d'établir l'appel entrant vers le numéro de téléphone actuel via la route la moins coûteuse.

13. Serveur de communication (150) selon l'une quelconque des revendications 8 à 12, comprenant en outre :
des moyens mesurant et stockant des statistiques relatives aux appels établis via le serveur de communication (150).

14. Système (100) comprenant le serveur de communication (150) selon l'une quelconque des revendications 8 à 13, et un terminal mobile (110), le terminal mobile (110) comprenant :
un moyen de stockage conçu pour stocker un identifiant d'un utilisateur du terminal mobile (110) ;
un moyen de détection conçu pour détecter un identifiant d'une carte SIM active du terminal mobile (110) ou le numéro de téléphone d'un mode de communication actif du terminal mobile (110) ; et
un moyen d'envoi conçu pour envoyer la communication au serveur de communication (150).

15. Système (100) selon la revendication 14, dans lequel le terminal mobile (110) comprend en outre :
un moyen de réception pour recevoir et interpréter une table de routage à partir du serveur de communication (150), la table de routage indiquant un routage préféré des appels sortants.

16. Système (100) selon la revendication 14 ou la revendication 15, dans lequel le moyen de détection est conçu pour détecter l'identifiant de la carte SIM active ou le mode de communication actif en réponse à l'activation de la carte SIM active ou du mode de communication actif.

17. Système (100) selon l'une quelconque des revendications 14 à 16, dans lequel le terminal mobile (110) est en outre conçu pour recevoir deux cartes SIM ou modes de communication ou plus, et pour activer sélectivement l'une ou l'un des deux cartes SIM ou modes de communication ou plus pour une utilisation dans une communication, dans lequel la carte SIM active est la carte SIM actuellement activée.

18. Système (100) selon l'une quelconque des revendications 14 à 17, dans lequel le terminal mobile (110) est en outre conçu pour sélectionner un réseau (125, 140) pour l'itinérance d'un certain nombre de réseaux aptes à être sélectionnés (125, 140), la sélection étant basée sur des informations de coût stockées dans le terminal mobile (110) pour le nombre de réseaux (125, 140) et sur la carte SIM active ou le mode de communication actif.

19. Produit programme d'ordinateur comprenant des instructions exécutables par ordinateur pour réaliser les étapes du procédé selon l'une quelconque des revendications 1 à 7.
